# EUROPEAN PATENT APPLICATION

(11) **EP 4 436 140 A1**
(43) Date of publication of application: **25.09.2024**
(21) Application number: 22897453.1
(22) Date of filing: 17.10.2022
(51) Int. Cl.: H04L 67/1095

(54) **DATA SYNCHRONIZATION METHOD, UDM, AND COMPUTER-READABLE STORAGE MEDIUM**

(30) Priority: 23.11.2021 CN 202111394441
(71) Applicant: ZTE Corporation, Shenzhen, Guangdong 518057 (CN)
(72) Inventor: LI, Xu, Shenzhen, Guangdong 518057 (CN)
(74) Representative: Zoli, Filippo
(86) International application number: PCT/CN2022/125778
(87) International publication number: WO 2023/093370

(57) **Abstract**

Disclosed in the present application are a data synchronization method, UDM, and a computer-readable storage medium, wherein the data synchronization method is applied to first UDM, and the first UDM is communicatively connected to second UDM. The data synchronization method comprises: determining, from subscription data, target synchronization data belonging to second UDM (S110); and sending the target synchronization data to the second UDM, such that the second UDM performs data synchronization according to the target synchronization data (S120).

## Description

### CROSS-REFERENCE TO RELATED APPLICATION

This application is filed on the basis of Chinese patent application 202111394441.0 filed November 23, 2021, and claims priority to the Chinese patent application, the entire contents of which are incorporated herein by reference.

### TECHNICAL FIELD

The present disclosure relates to, but not limited to, the technical field of communication, and more particularly, to a data synchronization method, a Unified Data Management (UDM), and a computer-readable storage medium.

### BACKGROUND

With the development of Fifth Generation (5G) mobile communication technology, not only has a public network 5G Core Network (5GC) been built, but also a customized private 5GC for specific parks. By synchronizing subscription data between the Unified Data Management (UDM) of the public network 5GC and the UDM of the private network 5GC, the latter can provide disaster recovery solutions for enterprise users in a park in the case where the public network 5GC is disconnected from the private network 5GC. A subscription data synchronization scheme in the related technology is mainly to synchronize all the subscription data in the UDM of the public network 5GC to the UDM of the private network 5GC, this results in the synchronization of a significant amount of unnecessary data in the usage scenarios of the public network 5GC and the private network 5GC, thereby reducing the efficiency of data synchronization. Moreover, in practical application, the number of users in the UDM of the private network is far less than that in the UDM of the public network. However, at present, the UDM of the private network and the UDM of the public network are required to have the same resources to accommodate all user subscription data of UDM of the public network, resulting in high deployment costs for UDM devices of the private network.

### SUMMARY

The following is an overview of the subject described in detail herein. This overview is not intended to limit the scope of protection of the claims.

Embodiments of the present disclosure provide a data synchronization method, a UDM, and a computer-readable storage medium.

In accordance with a first aspect of the present disclosure, an embodiment provides a data synchronization method, applied to a first UDM which is communicatively connected to a second UDM, the data synchronization method including: determining, from subscription data, target synchronization data belonging to the second UDM; and sending the target synchronization data to the second UDM, such that the second UDM performs data synchronization according to the target synchronization data.

In accordance with a second aspect of the present disclosure, an embodiment provides a UDM, including: a memory, a processor, and a computer program stored in the memory and executable by the processor, where the computer program, when executed by the processor, causes the processor to implement the data synchronization method described in any embodiment in the first aspect.

In accordance with a third aspect of the present disclosure, an embodiment provides a computer-readable storage medium, storing a computer-executable instruction which, when executed by a processor, causes the processor to implement the data synchronization method described in any embodiment in the first aspect.

Other features and advantages of the present disclosure will be set forth in the following specification, and will be partly apparent from the description or understood by implementing the present disclosure. The objects and other advantages of the present disclosure can be realized and obtained by the structure particularly pointed out in the description, claims and drawings.

### BRIEF DESCRIPTION OF DRAWINGS

The drawings are provided for a further understanding of the technical schemes of the present disclosure, and constitute a part of the description. The drawings and embodiments of the present disclosure are used to illustrate the technical schemes of the present disclosure, and do not constitute a limitation to the technical schemes of the present disclosure.
Fig. 1 is a flowchart of steps of a data synchronization method provided by an embodiment of the present disclosure;
Fig. 2 is a flowchart of steps of obtaining target synchronization data provided by another embodiment of the present disclosure;
Fig. 3 is a flowchart of a step of obtaining target synchronization data provided by another embodiment of the present disclosure;
Fig. 4 is a flowchart of steps of obtaining target synchronization data provided by another embodiment of the present disclosure;
Fig. 5 is a flowchart of steps of sending target synchronization data to a second UDM provided by another embodiment of the present disclosure;
Fig. 6 is a flowchart of steps of a data synchronization method provided by another embodiment of the present disclosure;
Fig. 7 is a flowchart of a step of decrypting target synchronization data provided by another embodiment of the present disclosure;
Fig. 8 is a flowchart of a step of sending data requirement information to a first UDM by a second UDM provided by another embodiment of the present disclosure;
Fig. 9 is a networking structure diagram of a first UDM and second UDMs provided by another embodiment of the present disclosure;
Fig. 10 is a networking structure diagram of a first UDM and a second UDM provided by another embodiment of the present disclosure;
Fig. 11 is a flowchart of steps of a data synchronization method provided by another embodiment of the present disclosure;
Fig.12 is a flowchart of steps of a data synchronization method provided by another embodiment of the present disclosure; and
Fig. 13 is a schematic structural diagram of a UDM provided by another embodiment of the present disclosure.

### DETAILED DESCRIPTION

To make the objects, technical schemes and advantages of the present disclosure clear, the present disclosure will be further described in detail in conjunction with the drawings and embodiments. It should be understood that the specific embodiments described here are only used to illustrate the present disclosure, and are not used to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

The present disclosure provides a data synchronization method, a UDM and a computer-readable storage medium. The data synchronization method is applied to a first UDM which is communicatively connected to a second UDM, and the data synchronization method includes: determining, from subscription data, target synchronization data belonging to the second UDM; and sending the target synchronization data to the second UDM, such that the second UDM performs data synchronization according to the target synchronization data. According to the scheme provided by the embodiment of the present disclosure, by determining target synchronization data belonging to the second UDM from subscription data in the first UDM and sending the target synchronization data to the second UDM, data synchronization between the first UDM and the second UDM is realized. Compared with the technical scheme of synchronizing all subscription data in the first UDM to the second UDM in the related technology, the technical scheme of the present disclosure has the advantage that the efficiency of data synchronization between the first UDM and the second UDM can be effectively improved.

The embodiments of the present disclosure will be illustrated below with reference to the accompanying drawings.

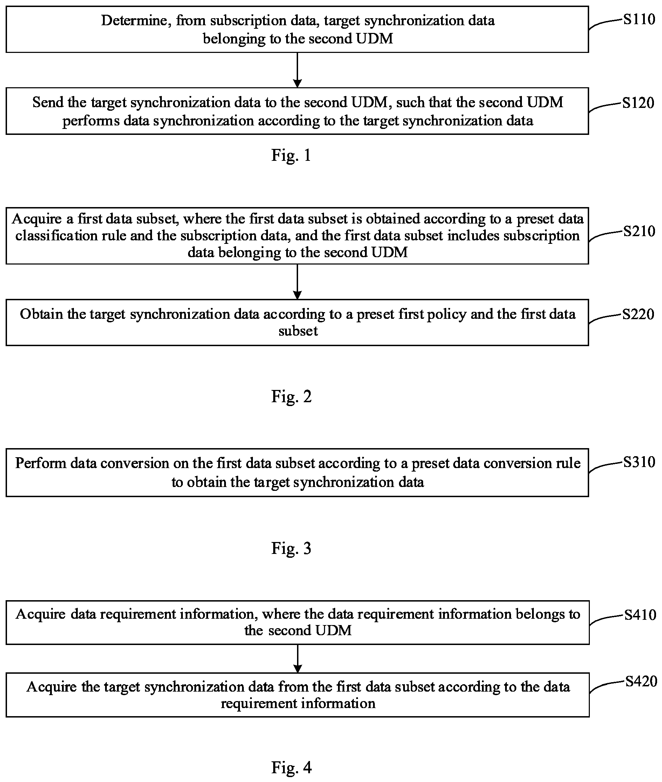

Fig. 1 is a flowchart of steps of a data synchronization method provided by an embodiment of the present disclosure. As shown in Fig. 1, the data synchronization method is applied to a first UDM which is communicatively connected to a second UDM. The data synchronization method includes, but not limited to, steps S 110 to S120.

At S110, target synchronization data belonging to the second UDM is determined from subscription data.

It can be understood that the UDM is used to manage subscription data of a terminal device and registration information related to the terminal device. The subscription data is the data related to the subscription between a user using the terminal device and an operator, and those having ordinary skill in the art are familiar with the content of the subscription data, which will not be repeated in the embodiment of the present disclosure.

It should be noted that the subscription data in the embodiment of the present disclosure may be sent by a Business Operation Support System (BOSS) to a first core network to which the first UDM belongs, which will not be repeated here.

It should be noted that the number of second UDMs and the amount of target synchronization data is not limited in the embodiment of the present disclosure, that is, the first core network to which the first UDM belongs may be connected to a plurality of second core networks, the second core networks being core networks to which the second UDMs belong, for example, the first UDM may be a UDM of the public network 5GC, which corresponds to a plurality UDMs of the park private network 5GC, that is, the second UDMs.

It can be understood by those having ordinary skills in the art that determining, from subscription data, target synchronization data belonging to the second UDM, that is, determining target synchronization data meeting data synchronization requirements of the second UDM from subscription data in the first UDM, provides a data basis for implementing data synchronization between the first UDM and the second UDM. Compared with the technical scheme of synchronizing all subscription data in the first UDM to the second UDM in the related technology, the technical scheme of the present disclosure enables the second UDM to perform data synchronization according to the target synchronization data directly and the second UDM does not need to additionally consume network resources to screen target data from all subscription data, thereby effectively improving the efficiency of data synchronization between the first UDM and the second UDM.

At S120, the target synchronization data is sent to the second UDM, such that the second UDM performs data synchronization according to the target synchronization data.

It should be noted that the time for the first UDM to send the target synchronization data to the second UDM is not limited in the embodiment of the present disclosure, that is, the target synchronization data may be sent to the second UDM regularly, or sent to the second UDM regularly in real time.

It can be understood that the target synchronization data belonging to the second UDM is sent to the second UDM, such that the second UDM performs data synchronization according to the target synchronization data, thereby improving the efficiency of data synchronization between the first UDM and the second UDM.

In addition, referring to Fig. 2, in an embodiment, S 110 in the embodiment shown in Fig. 1 further includes, but not limited to, the following steps S210 to S220.

At S210, a first data subset is acquired, where the first data subset is obtained according to a preset data classification rule and the subscription data, and the first data subset includes subscription data belonging to the second UDM.

At S220, the target synchronization data is obtained according to a preset first policy and the first data subset.

It can be understood that when the first UDM establishes a connection with the second UDM, a mapping relationship with the second UDM is established in the first UDM, so the first UDM stores preset identification information of the second UDM, which may include user type information or service type information of the subscription data, and classifies the subscription data according to a data classification rule to obtain a first data subset, the first data subset including subscription data belonging to the second UDM.

It should be noted that the data classification rule is not limited in the embodiment of the present disclosure, that is, subscription data may be classified according to Data Network Name (DNN), slice and other identifiers in the first UDM, and the classified first data subset corresponds to the second UDM.

It should be noted that the time for acquiring the first data subset is not limited in the embodiment of the present disclosure, that is, the first data subset may be acquired regularly according to a preset data classification rule and the subscription data, or may be acquired according to the preset data classification rule and new subscription data when the first UDM acquires the new subscription data.

It should be noted that in this embodiment, the generation of the target synchronization data is an operation result corresponding to the first data subset, which is preset in the first policy, for example, the first data subset is directly determined as the target synchronization data; or intermediate data is acquired from the first data subset as the target synchronization data according to the preset requirements of the first policy; or a data format of the second UDM to which the first data subset belongs is determined, and the first data subset is converted into target synchronization data adapted to the data format. Those having ordinary skills in the art have the motivation to adjust the first policy according to the actual situation, which is not limited in this embodiment.

It can be understood that in the embodiment of the present disclosure, the data synchronization requirement of the second UDM may be better met by processing the first data subset through a plurality of preset first policies, thereby improving the efficiency of data synchronization between the first UDM and the second UDM.

In addition, referring to Fig. 3, in an embodiment, S220 in the embodiment shown in Fig. 2 further includes, but not limited to, a following step S310.

At S310, data conversion is performed on the first data subset according to a preset data conversion rule to obtain the target synchronization data.

It can be understood that the data format used in the first UDM may not necessarily exactly match the data format used in the second UDM. When it is detected that the data format in the first UDM is different from the data format in the second UDM, the data format corresponding to the second UDM may be preset in the first UDM, and data conversion is performed on the first data subset according to a preset data conversion rule.

It should be noted that the content of data conversion rule is not limited in the present disclosure, that is, the content may include a synonymous conversion method for converting data field names or a synonymous conversion method for data field values.

It can be understood that sending the target synchronization data subjected to data conversion to the second UDM enables the second UDM to perform data synchronization directly according to the target synchronization data without performing data conversion on the target synchronization data, thus effectively improving the efficiency of data synchronization.

In addition, referring to Fig. 4, in an embodiment, S220 in the embodiment shown in Fig. 2 further includes, but not limited to, the following steps S410 to S420.

At S410, data requirement information is acquired, where the data requirement information belongs to the second UDM.

At S420, the target synchronization data is acquired from the first data subset according to the data requirement information.

It can be understood that data requirement information belonging to the second UDM is acquired, where the data requirement information represents the data type or data value of the subscription data required by the second UDM, which is not limited in the embodiment of the present disclosure, and the target synchronization data is acquired from the first data subset according to the data requirement information, such that the data synchronization requirements of the second UDM can be better met.

It should be noted that the mode of acquiring the data requirement information is not limited, that is, the data requirement information may be sent to the first UDM by the second UDM, or the data requirement information of the second UDM may be preset in the first UDM, which may be adjusted and selected by those having ordinary skills in the art according to the actual situation.

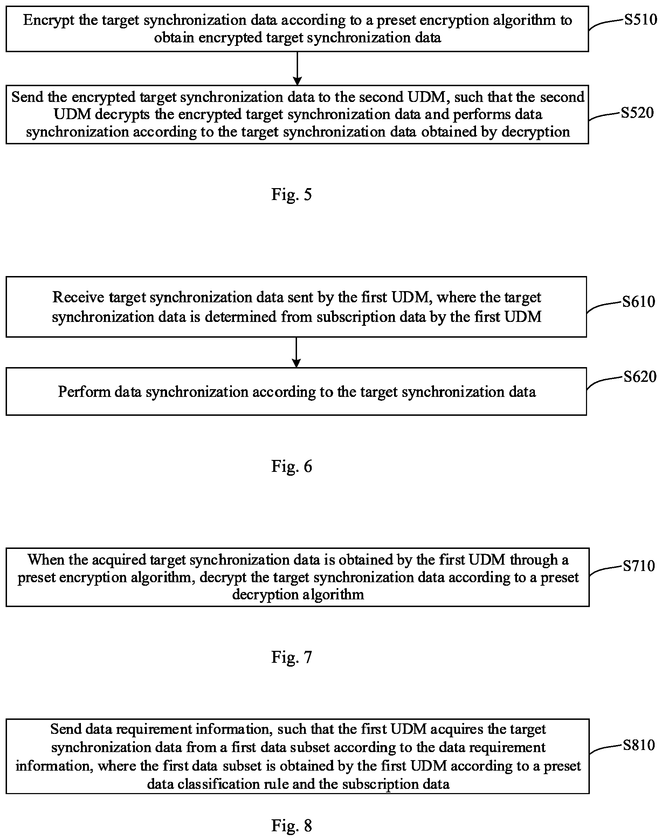

In addition, referring to Fig. 5, in an embodiment, S120 in the embodiment shown in Fig. 1 further includes, but not limited to, the following steps S510 to S520.

At S510, the target synchronization data is encrypted according to a preset encryption algorithm to obtain encrypted target synchronization data.

At S520, the encrypted target synchronization data is sent to the second UDM, such that the second UDM decrypts the encrypted target synchronization data and performs data synchronization according to the target synchronization data obtained by decryption.

It can be understood that the content of the target synchronization data is not limited in the embodiment of the present disclosure, that is, the target synchronization data includes not only the subscription data belonging to the second UDM, but also an authentication key. Encrypting the authentication key and the subscription data belonging to the second UDM according to a preset encryption algorithm can effectively improve the reliability of data synchronization between the first UDM and the second UDM.

It should be noted that the encryption algorithm is not limited in the embodiment of the present disclosure, which may be an Advanced Encryption Standard (AES), a Data Encryption Standard (DES), a 3DES encryption algorithm, an AES-256 encryption algorithm, or the like.

Fig. 6 is a flowchart of steps of a data synchronization method provided by another embodiment of the present disclosure. The data synchronization method is applied to a second UDM which is communicatively connected to a first UDM. As shown in Fig. 6, the data synchronization method includes, but not limited to, the following steps S610 to S620.

At S610, target synchronization data sent by the first UDM is received, where the target synchronization data is determined from subscription data by the first UDM.

At S620, data synchronization is performed according to the target synchronization data.

It should be noted that the technical scheme and principle of this embodiment may refer to the embodiment shown in Fig. 1, and the main difference lies in that the execution direction of data synchronization in this embodiment is different from that in the embodiment shown in Fig. 1. As a receiver of the target synchronization data in this embodiment, the second UDM performs data synchronization according to the target synchronization data sent by the first UDM, where the target synchronization data is determined from subscription data by the first UDM.

It should be noted that the time for receiving the target synchronization data is not limited in the embodiment of the present disclosure, that is, the target synchronization data sent by the first UDM may be received in real time or the target synchronization data sent by the first UDM may be received regularly.

It should be noted that the method for performing data synchronization by the second UDM according to the target synchronization data is not limited in the embodiment of the present disclosure. For example, when the target synchronization data sent by the first UDM is received, subscription data to be synchronized is acquired from a database of the second UDM, the target synchronization data is compared with the subscription data to be synchronized, and if it is detected that the subscription data to be synchronized includes differential data different from the target synchronization data, the differential data is deleted; alternatively, all target synchronization data is updated to the database of the second UDM to replace the subscription data to be synchronized. It can be understood that those having ordinary skills in the art may choose, according to the actual situation, a method for implementing data synchronization between the first UDM and the second UDM data according to the target synchronization data.

Fig. 7 is a flowchart of a step of decrypting target synchronization data provided by another embodiment of the present disclosure. Referring to Fig. 7, in an embodiment, after S610 in the embodiment shown in Fig. 6, the method further includes, but not limited to, a following step S710.

At S710, when the acquired target synchronization data is obtained by the first UDM through a preset encryption algorithm, the target synchronization data is decrypted according to a preset decryption algorithm.

It should be noted that the technical scheme and principle of this embodiment may refer to the embodiment shown in Fig. 5, and the main difference lies in that the execution direction of data synchronization in this embodiment is different from that in the embodiment shown in Fig. 5. As a receiver of the target synchronization data in this embodiment, the second UDM decrypts the target synchronization data according to a preset decryption algorithm when detecting that the target synchronization data is obtained by the first UDM through a preset encryption algorithm, and the details will not be repeated here for simplicity.

Fig. 8 is a flowchart of a step of sending data requirement information to a first UDM by a second UDM provided by another embodiment of the present disclosure. Referring to Fig. 8, in an embodiment, the data synchronization method shown in Fig. 6 further includes, but not limited to, a following step S810.

At S810, data requirement information is sent, such that the first UDM acquires the target synchronization data from a first data subset according to the data requirement information, where the first data subset is obtained by the first UDM according to a preset data classification rule and the subscription data.

It should be noted that the method step in this embodiment of the present disclosure may be described with reference to the embodiment in Fig. 4. The difference between this embodiment and the embodiment described in Fig. 4 lies in that this embodiment is described with the second UDM as an execution subject. It can be understood that sending data requirement information to the first UDM enables the first UDM to acquire the target synchronization data from a first data subset according to the data requirement information, better meeting the data synchronization requirements of the second UDM, and thus improving the efficiency of data synchronization.

In addition, to illustrate the data synchronization method provided by the present disclosure in detail, the technical scheme of the present disclosure is described in the following two embodiments.

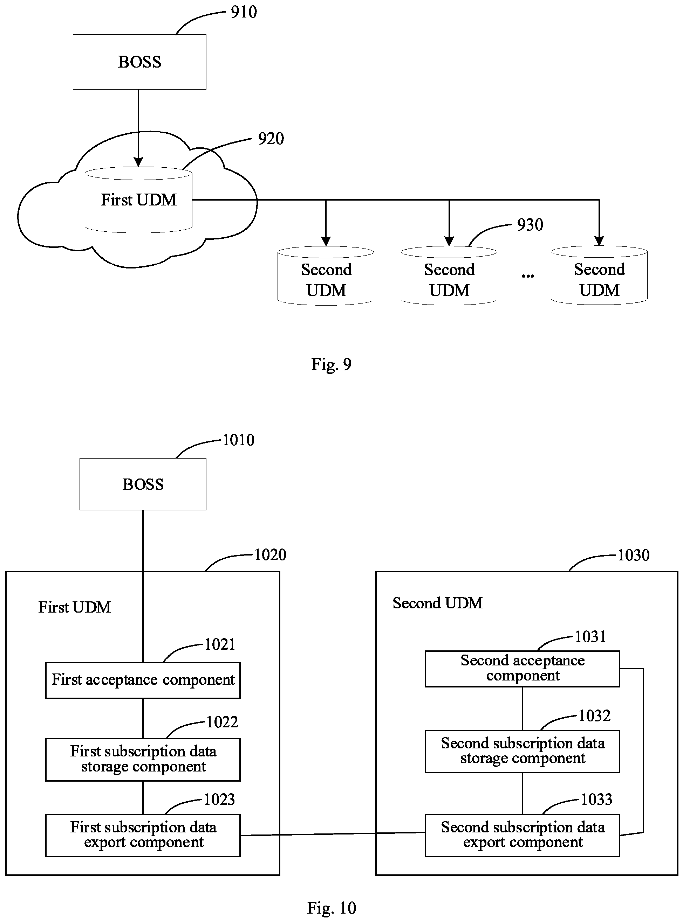

Fig. 9 is a networking structure diagram of a first UDM 920 and a second UDM 930 provided by another embodiment of the present disclosure. As shown in Fig. 9, the networking structure includes a BOSS 910, a first UDM 920 and a plurality of second UDMs 930, where the BOSS 910 is communicatively connected to the first UDM 920, and the first UDM 920 is communicatively connected to the plurality of second UDMs 930 respectively. The BOSS 910 is configured to send user subscription data to the first UDM 920 and maintain user subscription data in the first UDM 920. The first UDM 920 is a UDM of a public network 5GC, and the second UDM 930 is a UDM of a private network 5GC. The first UDM 920 is communicatively connected to the plurality of second UDMs 930 respectively, such that target synchronization data belonging to the second UDMs 930 can be acquired from the user subscription data in the first UDM 920 and synchronized to the second UDMs 930. It should be noted that the number of the second UDMs 930 is not limited in the embodiment of the present disclosure, which may be determined by those having ordinary skills in the art according to the actual situation of the public network 5GC and the private network 5GC.

Fig. 10 is a networking structure diagram of a first UDM 1020 and a second UDM 1030 provided by another embodiment of the present disclosure. As shown in Fig. 10, the networking structure includes a BOSS 1010, a first UDM 1020 and a second UDM 1030. The first UDM 1020 includes a first acceptance component 1021, a first subscription data storage component 1022 and a first subscription data export component 1023, where the first acceptance component 1021 is communicatively connected to the first subscription data storage component 1022, and the first subscription data export component 1023 is communicatively connected to the first subscription data storage component 1022. The second UDM 1030 includes a second acceptance component 1031, a second subscription data storage component 1032 and a second subscription data import component 1033, where the second acceptance component 1031 is communicatively connected to the second subscription data storage component 1032, the second subscription data import component 1033 is communicatively connected to the second subscription data storage component 1032, and the second acceptance component 1031 is communicatively connected to the second subscription data import component 1033. The BOSS 1010 is communicatively connected to the first acceptance component 1021, and sends user subscription data to the first acceptance component 1021. The first subscription data export component 1023 is communicatively connected to the second subscription data import component 1033, and the first subscription data export component 1023 synchronizes the target synchronization data belonging to the second UDM 1030 that is acquired from the user subscription data in the first UDM 1020 to the second UDM 1030 through the second subscription data import component 1033.

It should be noted that the data synchronization method in embodiment one or embodiment two is applied to the networking structure of the first UDM and the second UDM shown in Fig. 9 or Fig. 10, where the first UDM in embodiment one or embodiment two is a UDM of a public network, representing a UDM of a public network 5GC, and the second UDM is a UDM of a private network, representing a UDM of a private network 5GC.

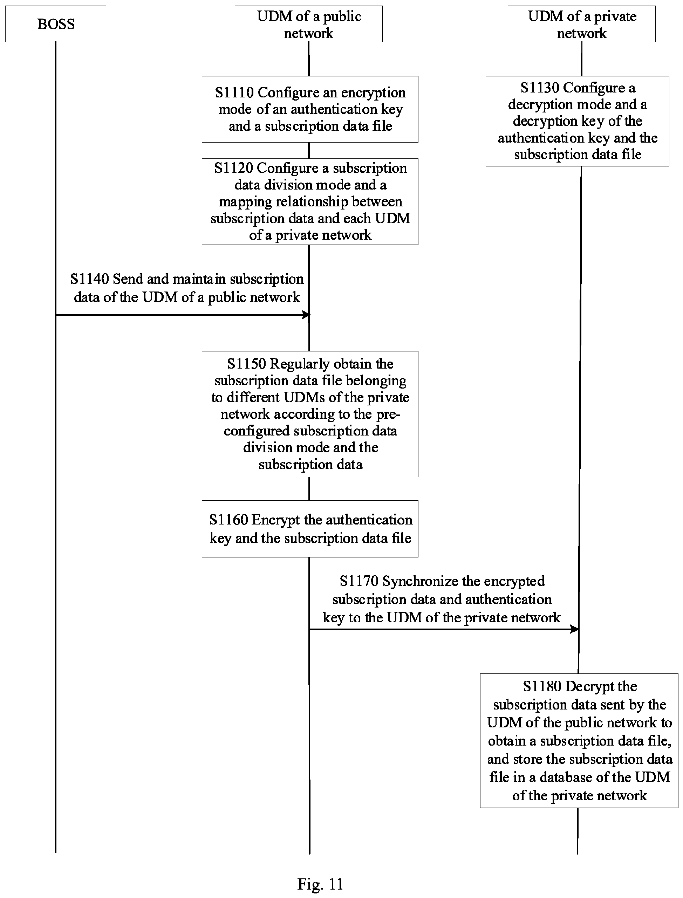

Embodiment one, Fig. 11 shows a data synchronization method provided by another embodiment of the present disclosure. Referring to Fig. 11, the data synchronization method includes the following steps S 1110 to S1180.

At S1110, the UDM of a public network configures an encryption mode of an authentication key and a subscription data file.

At S1120, the UDM of the public network configures a subscription data division mode and a mapping relationship between subscription data and each UDM of a private network.

At S1130, the UDM of the private network configures a decryption mode and a decryption key of the authentication key and the subscription data file.

At S1140, the BOSS sends and maintains subscription data of the UDM of the public network.

At S1150, the UDM of the public network regularly obtains the subscription data file belonging to different UDMs of the private network according to the pre-configured subscription data division mode and the subscription data sent by the BOSS.

At S1160, the UDM of the public network encrypts the authentication key and the subscription data file.

At S1170, the UDM of the public network synchronizes the encrypted subscription data and authentication key to the UDM of the private network.

At S1180, the UDM of the private network decrypts the subscription data sent by the UDM of the public network to obtain a subscription data file, and stores the subscription data file in a database of the UDM of the private network.

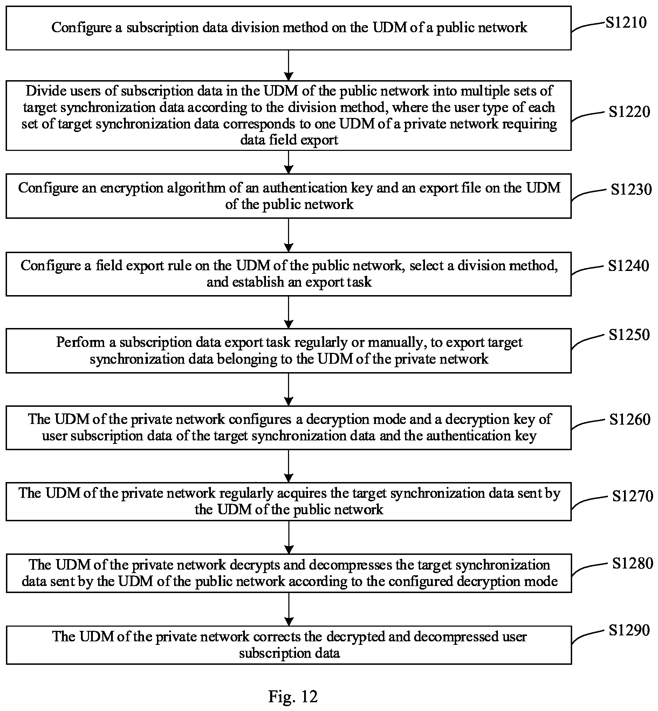

Embodiment two, Fig. 12 shows a data synchronization method provided by another embodiment of the present disclosure. As shown in Fig. 12, the data synchronization method includes the following steps S1210 to S1290.

At S1210, a subscription data division method is configured on a UDM of a public network, where the division method includes, but not limited to, dividing according to a number segment, DNN, a slice, an identifier of a UDM of a private network subscribed by a user, etc.

At S1220, users of subscription data in the UDM of the public network are divided into multiple sets of target synchronization data according to the division method, where the user type of each set of target synchronization data corresponds to one UDM of the private network requiring data field export.

At S1230, an encryption algorithm of an authentication key and an export file is configured on the UDM of the public network.

At S1240, a field export rule is configured on the UDM of the public network, a division method is selected, and an export task is established.

Steps of establishing the export task are as follows: configuring a field export rule, and exporting data fields in the UDM of the public network to corresponding fields in the UDM of the private network according to a specified export rule, including but not limited to, the following rules: converting field names, i.e., converting data field names in the UDM of the public network into synonymous field names required by the UDM of the private network; converting field values, i.e., converting data field values in the UDM of the public network into synonymous field values required by the UDM of the private network; exporting fields, i.e., exporting, by the UDM of the public network, only fields that need to be exported for customization of the UDM of the private network; selecting a user division method, and exporting multiple target synchronization data according to a correspondence between the divided user type and the UDM of the private network.

The target synchronization data includes a sensitive information authentication key and divided user subscription data. The sensitive information authentication key is encrypted, and AES, DES, 3DES and other encryption methods are provided. The divided user subscription data is compressed and encrypted, and the encryption methods may include AES-256, DES and 3DES.

It can be understood that when the export task is established, field export rules may be flexibly selected according to actual needs to export subscription data, to meet the requirements of different UDMs of the private network for the UDM of the public network to export data.

At S1250, a subscription data export task is performed regularly or manually, to export target synchronization data belonging to the UDM of the private network.

At S1260, the UDM of the private network configures a decryption mode and a decryption key of user subscription data of the target synchronization data and the authentication key.

At S1270, the UDM of the private network regularly acquires the target synchronization data sent by the UDM of the public network.

At S1280, the UDM of the private network decrypts and decompresses the target synchronization data sent by the UDM of the public network according to the configured decryption mode.

At S1290, the UDM of the private network corrects the decrypted and decompressed user subscription data, including but not limited to, the following steps: for a user identifier that does not exist in the public network UDM, deleting user subscription data corresponding to the user identifier; and updating all the target synchronization data sent by the UDM of the public network to the UDM of the private network.

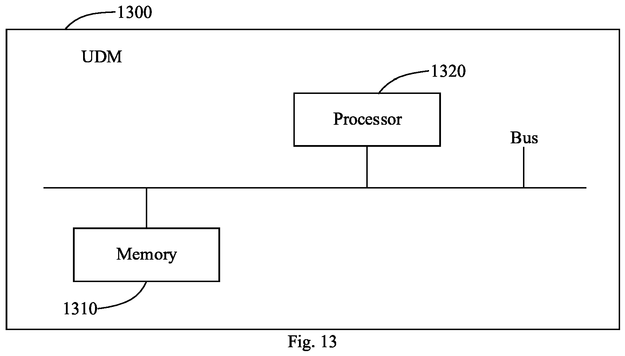

Fig. 13 is a schematic structural diagram of a UDM provided by another embodiment of the present disclosure. An embodiment of the present disclosure provides a UDM 1300, including: a memory 1310, a processor 1320 and a computer program stored in the memory 1310 and executable by the processor 1320.

The processor 1320 and the memory 1310 may be connected by a bus or in other ways.

The non-transient software program and instructions required to implement the data synchronization method in the above embodiment are stored in the memory 1310 which, when executed by the processor 1320, cause the processor to implement the data synchronization method applied to the first UDM 1300 in the above embodiment, for example, implement the method steps S110 to S120 in Fig. 1, S210 to S220 in Fig. 2, S310 in Fig. 3, S410 to S420 in Fig. 4, or S510 to S520 in Fig. 5, or implement the data synchronization method applied to the second UDM 1300 in the above embodiment, for example, implement the method steps S610 to S620 in Fig. 6, S710 in Fig. 7, or S810 in Fig. 8.

The apparatus embodiments described above are merely illustrative, and the units described as separate components may or may not be physically separated, that is, they may be located in one place, or may be distributed onto multiple network elements. Some or all of the modules may be selected according to actual needs to achieve the object of this embodiment.

In addition, an embodiment of the present disclosure provides a computer-readable storage medium, storing a computer-executable instruction which, when executed by a processor 1320 or controller, for example, by a processor 1320 in the above embodiment of the UDM 1300, may cause the above-mentioned processor to implement the data synchronization method applied to the first UDM in the above embodiment, for example, implement the method steps S110 to S120 in Fig. 1, S210 to S220 in Fig. 2, S310 in Fig. 3, S410 to S420 in Fig. 4, or S510 to S520 in Fig. 5, or implement the data synchronization method applied to the second UDM in the above embodiment, for example, implement the method steps S610 to S620 in Fig. 6, S710 in Fig. 7, or S810 in Fig. 8. Those having ordinary skills in the art can understand that all or some of the steps, and systems in the method disclosed above may be implemented as software, firmware, hardware and appropriate combinations thereof. Some or all of the physical components may be implemented as software executed by a processor, such as a central processing unit, a digital signal processor or a microprocessor, or as hardware, or as an integrated circuit, such as an application specific integrated circuit. Such software may be distributed on a computer-readable medium, and the computer-readable medium may include a computer storage medium (or a non-transitory medium) and a communication medium (or a transitory medium). As is well known to those having ordinary skills in the art, the term "computer storage medium" includes volatile and nonvolatile, removable and non-removable media implemented in any method or technology for storing information such as computer-readable instructions, data structures, program modules or other data. The computer storage medium includes, but not limited to, Random Access Memory (RAM), Read Only Memory (ROM), Electrically Erasable Programmable Read-Only Memory (EEPROM), flash memory or other memory technologies, Compact Disc ROM (CD-ROM), Digital Versatile Disc (DVD) or other CD storages, magnetic cassettes, magnetic tapes, disk storages or other magnetic storage devices or any other medium that may be used to store desired information and may be accessed by a computer. In addition, as is well known to those having ordinary skills in the art that the communication medium may generally include computer readable instructions, data structures, program modules or other data in a modulated data signal such as a carrier wave or other transmission mechanism, and may include any information delivery medium.

Embodiments of the present disclosure include a data synchronization method, a UDM, and a computer-readable storage medium. The data synchronization method is applied to a first UDM which is communicatively connected to a second UDM, and the data synchronization method includes: determining, from subscription data, target synchronization data belonging to the second UDM, and sending the target synchronization data to the second UDM, such that the second UDM performs data synchronization according to the target synchronization data. According to the scheme provided by the embodiment of the present disclosure, the target synchronization data belonging to the second UDM is determined from the subscription data in the first UDM, and the target synchronization data is sent to the second UDM, thereby realizing data synchronization between the first UDM and the second UDM. Compared with the technical scheme of synchronizing all the subscription data in the first UDM to the second UDM in the related technology, the technical scheme of the present disclosure has the advantage that the efficiency of data synchronization between the first UDM and the second UDM can be effectively improved, and deployment costs of UDMs of a private network can be reduced.

The above is a detailed description of several embodiments of the present disclosure, but the present disclosure is not limited to the above embodiments. Those having ordinary skills in the art can also make various equivalent modifications or substitutions without departing from the scope of the present disclosure, and these equivalent modifications or substitutions are included in the scope defined by the claims of the present disclosure.

## Claims

1. A data synchronization method, applied to a first Unified Data Management (UDM) which is communicatively connected to a second UDM, the data synchronization method comprising:
determining, from subscription data, target synchronization data belonging to the second UDM; and
sending the target synchronization data to the second UDM, such that the second UDM performs data synchronization according to the target synchronization data.

2. The method of claim 1, wherein determining, from subscription data, target synchronization data belonging to the second UDM comprises:
acquiring a first data subset, wherein the first data subset is obtained according to a preset data classification rule and the subscription data, and the first data subset comprises subscription data belonging to the second UDM; and
obtaining the target synchronization data according to a preset first policy and the first data subset.

3. The method of claim 2, wherein obtaining the target synchronization data according to a preset first policy and the first data subset comprises:
performing data conversion on the first data subset according to a preset data conversion rule to obtain the target synchronization data.

4. The method of claim 2, wherein obtaining the target synchronization data according to a preset first policy and the first data subset comprises:
acquiring data requirement information, the data requirement information belonging to the second UDM; and
acquiring the target synchronization data from the first data subset according to the data requirement information.

5. The method of claim 1, wherein sending the target synchronization data to the second UDM, such that the second UDM performs data synchronization according to the target synchronization data comprises:
encrypting the target synchronization data according to a preset encryption algorithm to obtain encrypted target synchronization data; and
sending the encrypted target synchronization data to the second UDM, such that the second UDM decrypts the encrypted target synchronization data and performs data synchronization according to the target synchronization data obtained by decryption.

6. A data synchronization method, applied to a second Unified Data Management (UDM) which is communicatively connected to a first UDM, the data synchronization method comprising:
receiving target synchronization data sent by the first UDM, wherein the target synchronization data is determined from subscription data by the first UDM; and
performing data synchronization according to the target synchronization data.

7. The method of claim 6, wherein after receiving the target synchronization data sent by the first UDM, the method further comprises:
in response to the acquired target synchronization data being obtained by the first UDM through a preset encryption algorithm, decrypting the target synchronization data according to a preset decryption algorithm.

8. The method of claim 6, further comprising:
sending data requirement information, such that the first UDM acquires the target synchronization data from a first data subset according to the data requirement information, wherein the first data subset is obtained by the first UDM according to a preset data classification rule and the subscription data.

9. A Unified Data Management (UDM), comprising: a memory, a processor, and a computer program stored in the memory and executable by the processor, wherein the computer program, when executed by the processor, causes the processor to perform the data synchronization method of any of claims 1 to 8.

10. A computer-readable storage medium, storing a computer-executable instruction which, when executed by a processor, causes the processor to perform the data synchronization method of any of claims 1 to 8.
